# EUROPÄISCHE PATENTSCHRIFT

(11) **EP 1 480 024 B1**
(45) Veröffentlichungstag und Bekanntmachung des Hinweises auf die Patenterteilung: **04.03.2009**
(21) Anmeldenummer: 04101782.3
(22) Anmeldetag: 28.04.2004
(51) Int. Cl.: G01G 19/08

(54) **Vorrichtung zur Messung der Gewichtskraft einer Last**
Device for measuring the weight of a load
Dispositif pour la mesure du poids d'une charge

(30) Priorität: 17.05.2003 DE 10322336
(43) Veröffentlichungstag der Anmeldung: 24.11.2004
(73) Patentinhaber: DEERE & COMPANY, Moline, Illinois 61265-8098 (US)
(72) Erfinder: Viaud, Jean, 70100, Gray (FR); Biziorek, Stephane, 70600, Champlitte (FR)
(74) Vertreter: Holst, Sönke

(56) Entgegenhaltungen:
- EP-A- 0 403 200
- EP-A- 0 515 109
- EP-A- 1 029 440
- FR-A- 2 651 880
- US-A- 4 742 880
- US-A- 5 384 436

## Beschreibung

Die Erfindung betrifft eine Maschine in Form einer Presse zur Erzeugung von Ballen, mit einem Fahrgestell, einer Presse und einer Vorrichtung zur Messung der Gewichtskraft eines Ballen in der Maschine, wobei der Ballen in der Maschine zwischen einer ersten Position und einer zweiten Position beweglich ist und eine mit einer Verarbeitungseinrichtung verbundene Messeinrichtung zur Erfassung einer durch die Gewichtskraft des Ballen beeinflussten Messgröße vorgesehen ist, wie z.B. im EP-A-1029440

Im Stand der Technik sind verschiedene Einrichtungen zur Messung der Masse eines Ballens aus gepresstem landwirtschaftlichem Erntegut bekannt.

Es wurde beispielsweise vorgeschlagen (DE 44 36 128 A, DE 198 35 163 A, DE 199 10 555 A, US 4 742 880 A, US 5 384 436 A und US 5 742 010 A), einen fertiggestellten Ballen aus der Presskammer hinauszufördern, auf eine Auflagefläche zu verbringen und dort bei einem sich im ruhenden oder bewegten Zustand befindlichen Ballen seine Gewichtskraft zu bestimmen, indem die Kraft erfasst wird, die er auf die Auflagefläche ausübt. Da die Ballen relativ hohe Massen haben, ist ein Anhalten schwer möglich, während eine Messung der Gewichtskraft bei bewegtem Ballen einem hohen Messfehler unterliegt.

In der DE 195 43 343 A wird vorgeschlagen, die an den Achsen und der Zugdeichsel einer Ballenpresse wirkenden Gewichtskräfte zu erfassen. Anhand der Änderung der Kräfte beim Auswerfen eines Ballens wird die Gewichtskraft des hergestellten Ballens berechnet. Es ist eine höhere Anzahl von Sensoren und eine ausgefeilte Rechentechnik erforderlich, um brauchbare Messwerte zu erhalten.

Das der Erfindung zu Grunde liegende Problem wird darin gesehen, eine einfache und zuverlässige Messeinrichtung zur Erfassung der Gewichtskraft eines Ballens bereitzustellen, welche die oben erwähnten Nachteile nicht oder in einem verminderten Ausmaß aufweist.

Dieses Problem wird erfindungsgemäß durch die Lehre der Patentansprüche 1 und 6 gelöst, wobei in den weiteren Patentansprüchen Merkmale aufgeführt sind, die die Lösung in vorteilhafter Weise weiterentwickeln.

In einer Maschine in Form einer Ballenpresse ist ein Ballen zwischen einer ersten und einer zweiten Position bewegbar. Die erste Position des Ballens entspricht insbesondere der Presskammer, in der der Ballen aus Erntegut oder beliebigem anderen Material, z. B. Abfällen, hergestellt wird, während die zweite Position die Wickelposition sein kann, wenn die Maschine eine Pressen-Wickel-Kombination ist. Es wird vorgeschlagen, eine Messeinrichtung derart anzubringen, dass sie eine Messgröße erfasst, die (unter anderem) von der Gewichtskraft des Ballens abhängig ist, wenn sich der Ballen in der ersten Position befindet, und ein entsprechendes erstes Signal bereitstellt. Anschließend wird der Ballen in die zweite Position bewegt. Die (selbe) Messeinrichtung erfasst dann wieder eine Messgröße, die (unter anderem) von der Gewichtskraft des Ballens abhängt und stellt ein zugehöriges zweites Signal bereit. Eine Verarbeitungseinrichtung empfängt das erste Signal und das zweite Signal. Anhand beider Signale berechnet die Verarbeitungseinrichtung die Gewichtskraft des Ballens.

Auf diese Weise erhält man eine Vorrichtung zur Messung der Gewichtskraft eines Ballens. Die Auswirkung der Position des Ballens auf die von der Messeinrichtung erfasste Messgröße wird erfasst und zur Bestimmung der Gewichtskraft des Ballens herangezogen.

Neben den Signalen der Messeinrichtung basiert die Ausgabe der Verarbeitungseinrichtung zur Berechnung der Gewichtskraft des Ballens auf bekannten mechanischen Eigenschaften der Maschine, wie beispielsweise den Abständen der ersten und zweiten Position des Ballens von einem Schwer- oder Schwenkpunkt der Maschine und weiteren mechanischen Daten der Maschine. Außerdem wird der Verarbeitungseinrichtung eine Information über die aktuelle Position des Ballens zugeführt. Die in der Verarbeitungseinrichtung ablaufenden Rechenvorgänge können auf physikalischen Modellen der Maschine basieren. Alternativ oder zusätzlich werden an realen Ballen gewonnene Messwerte herangezogen, die in einer Datenbank oder als Kalibrierkurven abgelegt sein können. Derartige Messwerte können auch als maschinenspezifische Größen in auf physikalischen Modellen der Maschine basierende Rechenvorgänge eingehen.

Die Messeinrichtung kann zwischen dem Rahmen oder Gestell der Maschine und den Rahmen oder das Gestell abstützenden Rädern angeordnet sein. Sie erfasst dort eine von der Gewichtskraft des Ballens beeinflusste Kraft des Rahmens oder Gestells auf die Räder oder, insbesondere bei Verwendung einer Tandemachse, ein entsprechendes Drehmoment. Die Messeinrichtung könnte alternativ oder zusätzlich zwischen dem Rahmen oder Gestell und einer Kupplungsöse angebracht sein. Dort erfasst sie die Kraft, mit der sich die Maschine auf einer Zugmaschine abstützt, bzw. mit der sie bestrebt ist, die Kupplung nach oben zu ziehen.

Aufgrund der erfindungsgemäßen Auswertung der Signale der Messeinrichtung bei an unterschiedlichen Positionen befindlichem Ballen genügt eine einzige Messeinrichtung. Es wäre aber denkbar, zur Schaffung von Redundanz bei einem Ausfall einer Messeinrichtung oder zur Erzeugung genauerer Messwerte, mehrere Messeinrichtungen der beschriebenen Art zu verwenden, die an unterschiedlichen Positionen angeordnet werden können.

In der Zeichnung ist ein nachfolgend näher beschriebenes Ausführungsbeispiel der Erfindung dargestellt. Es zeigt:
- Fig. 1: eine Maschine zur Bildung und Umwicklung von Ballen aus landwirtschaftlichem Erntegut in Form einer Kombination aus einer Presse, einem Wickelgerät und einem Fahrgestell in Seitenansicht und
- Fig. 2: ein Flussdiagramm zur Illustration der Betriebsweise der Vorrichtung der Maschine aus Figur 1 zur Messung der Gewichtskraft eines Ballens.

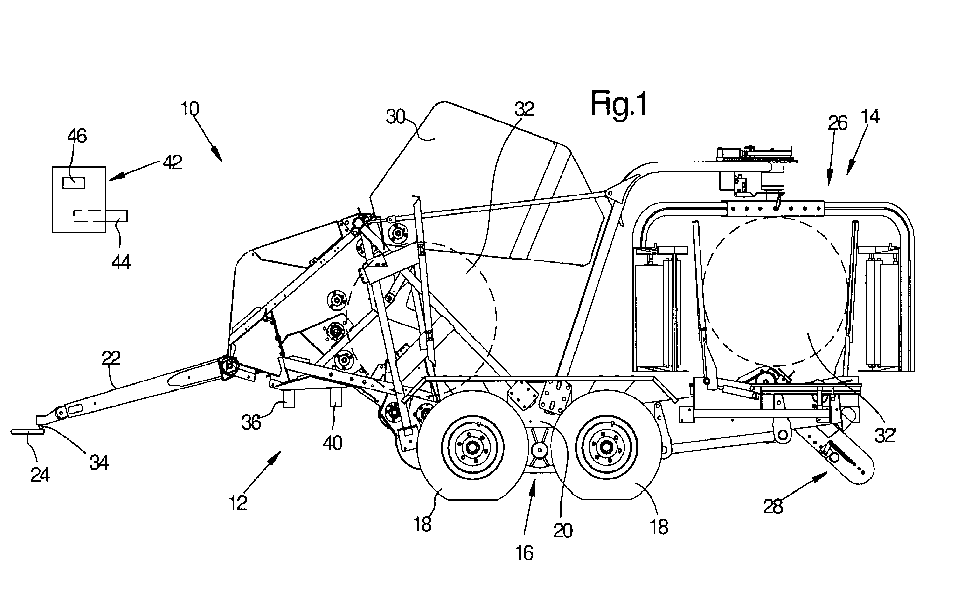

Die in Figur 1 gezeigte Maschine 10 zur Bildung und Umwicklung von Ballen aus landwirtschaftlichem Erntegut umfasst im Wesentlichen eine Presse 12, ein Wickelgerät 14 und ein Fahrgestell 16. Die Maschine 10 wird auch als Pressen-Wickel-Kombination bezeichnet.

Das Fahrgestell 16 weist eine Tandemachse mit zwei Rädern 18 auf. Es umfasst einen Rahmen 20, an dessen in Vorwärtsrichtung vorderem Ende eine Deichsel 22 angebracht ist, an deren Vorderseite wiederum eine Kupplungsöse 24 befestigt ist. Die Kupplungsöse 24 dient zum Ankoppeln eines Zugfahrzeugs, z. B. eines Ackerschleppers.

Der Rahmen 20 nimmt an seinem in Vorwärtsrichtung vorderen Ende die Presse 12 auf. Sie ist in dem dargestellten Ausführungsbeispiel als eine Rundballenpresse ausgebildet, was jedoch nicht zwingend ist. Statt dessen könnte auch eine Rechteck- oder eine Hochdruckballenpresse verwendet werden.

Am in Vorwärtsrichtung rückwärtigen Ende des Rahmens 20 ist das Wickelgerät 14 befestigt. Es weist im Wesentlichen zwei Komponenten auf, nämlich einen Wickelarm 26 und einen Wickeltisch 28. Wickelgeräte 14 der dargestellten Art sind auf dem Markt weit bekannt und haben die Aufgabe, einen in der Presse 12 gebildeten Ballen mit einer Folie luftdicht zu umhüllen, so dass Silagefutter gewonnen werden kann.

Beim Betrieb wird die Maschine 10 durch das Zugfahrzeug über ein Feld bewegt, auf dem Erntegut liegt. Durch eine (nicht eingezeichnete) Aufnahmeeinrichtung wird das Erntegut vom Boden des Felds aufgenommen und in der Presse 12 zu einem Ballen gepresst. Nachdem ein Ballen fertiggestellt ist, wird ein rückwärtiger Teil 30 der Presse 12 nach hinten und oben verschwenkt, wie in der Figur 1 dargestellt. Durch die Schwerkraft gelangt der Ballen nach Freigabe durch den rückwärtigen Teil 30 auf einen in der Zeichnung nicht dargestellten Schlitten, der ihn etwa oberhalb der hinteren Räder 18 aufnimmt und in das Wickelgerät 14 verbringt, in dem er mit luftdichter Folie eingehüllt wird. Es wäre zum Transport des Ballens zwischen der Presse 12 und dem Wickelgerät 14 auch ein beliebiger anderer, angetriebener Förderer denkbar, der beispielsweise einen Greifer, einen Fördergurt oder Förderwalzen aufweisen könnte. Der Ballen könnte auch nur durch die Schwerkraft in das Wickelgerät 145 gelangen. Ein sich in der Presse 12 befindender Ballen ist mit dem Bezugszeichen 32 gekennzeichnet, während mit dem Bezugszeichen 32' ein im Wickelgerät 14 angeordneter Ballen gekennzeichnet ist. In der Regel ist jedoch jeweils nur ein vollständiger Ballen gleichzeitig in der Maschine 10 vorhanden.

Die verschiedenen angetriebenen Elemente der Maschine 10 werden elektrohydraulisch bzw. elektromotorisch durch eine elektronische Steuerungseinheit 40 kontrolliert. Die Maschine 10 und ihre Funktionsweise werden in der DE 100 44 166 A1 und den dort genannten Referenzen, deren Offenbarungen durch Verweis mit in die vorliegenden Unterlagen aufgenommen werden, detailliert offenbart.

Die Maschine 10 umfasst eine erfindungsgemäße Vorrichtung zur Messung der Gewichtskraft des Ballens 32. Sie setzt sich aus einer Messeinrichtung 34 und einer Verarbeitungseinrichtung 36 zusammen. Die Messeinrichtung 34 umfasst eine zwischen der Deichsel 22 und der Kupplungsöse 24 eingefügte Kraftmesszelle, die zur Messung der vertikalen Kraft eingerichtet ist, mit der sich die Deichsel 22 auf der Kupplungsöse 24 und (über die Kupplungsöse 24) auf dem Zugfahrzeug abstützt. Die Messeinrichtung 34 ist durch eine Leitung oder einen Bus mit einer Verarbeitungseinrichtung 36 verbunden, die auch mit der Steuerungseinheit 40 verbunden ist. Die Verarbeitungseinrichtung 36 ist weiterhin über einen Bus oder drahtlos mit einer Anzeige- und Speichereinrichtung 42 verbunden, die in der Bedienerkabine des Zugfahrzeugs anordenbar ist. Die Anzeige- und Speichereinrichtung 42 umfasst eine Anzeigeeinheit 46, auf der unter anderem die von der Verarbeitungseinrichtung 36 ermittelten Gewichtskräfte der Ballen 32 zur Anzeige gebracht werden können, sowie eine Speichereinrichtung 44 in Form einer herausnehmbaren Speicherkarte. Letztere ermöglicht es, die erfassten Gewichtskraftdaten abzuspeichern und später weiterzuverarbeiten, beispielsweise zu Abrechnungszwecken. Die Anzeige- und Speichereinrichtung 42 kann in das Bussystems des Zugfahrzeugs integriert sein. Es wäre auch denkbar, die Verarbeitungseinrichtung 36 auf dem Zugfahrzeug anzuordnen und insbesondere in die Anzeige- und Speichereinrichtung 42 zu integrieren.

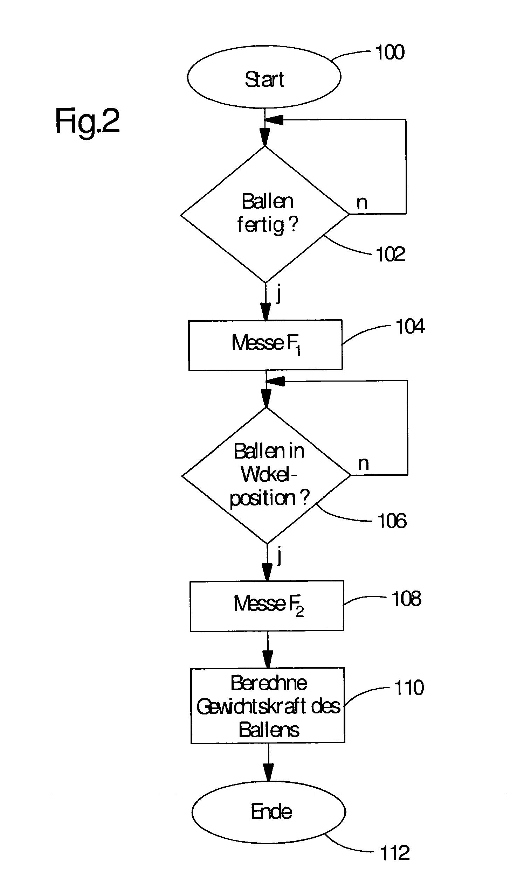

Die Betriebsweise der Vorrichtung zur Messung der Gewichtskraft des Ballens 32 wird im Folgenden anhand der Figur 2 erläutert. Sobald die Verarbeitungseinrichtung 36 anhand eines Signals von der Steuerungseinheit 40 darüber informiert wird, dass die Presse 12 mit der Bildung eines Ballens 32 begonnen hat, beginnt die Routine im Schritt 100. Im darauf folgenden Schritt 102 überprüft die Verarbeitungseinrichtung 36, ob von der Steuerungseinheit 40 eine Information vorliegt, die auf die Fertigstellung des Ballens 32 hinweist. Liegt diese Information nicht vor, wird der Schritt 102 wiederholt. Anderenfalls folgt der Schritt 104, in dem das Ausgangssignal der Messeinrichtung 34 erfasst und in einem Speicher der Verarbeitungseinrichtung 36 abgelegt wird.

Es folgt der Schritt 106, in dem die Verarbeitungseinrichtung 36 überprüft, ob der Ballen 32' schon im Wickelgerät 14 angekommen ist. Diese Überprüfung erfolgt ebenfalls anhand eines Signals von der Steuerungseinheit 40. Letztere kann die Information über die Position des Ballens 32 bzw. 32' anhand separater Sensoren gewinnen, z. B. an geeigneter Stelle angebrachten Lichtschranken. Alternativ oder zusätzlich kann die Position des Ballens 32 bzw. 32' aus Stellsignalen abgeleitet werden, die Aktoren der Maschine 10 zugeführt werden. So kann davon ausgegangen werden, dass sich ein Ballen 32' im Wickelgerät 14 befindet, falls der rückwärtige Teil 30 der Presse 12 hochgeschwenkt ist und ein bestimmtes Zeitintervall verstrichen ist. Ergibt die Abfrage im Schritt 106, dass sich der Ballen 32 noch nicht im Wickelgerät 14 befindet, wird dieser Schritt 106 wiederholt. Anderenfalls folgt der Schritt 108, in dem das Ausgangssignal der Messeinrichtung 34 erfasst und in einem Speicher der Verarbeitungseinrichtung 36 abgelegt wird.

Dem Schritt 108 folgt der Schritt 110, in dem die Verarbeitungseinrichtung 36 anhand der in den Schritten 104 und 108 erfassten Ausgangssignale der Messeinrichtung 34 die Gewichtskraft - und/oder bei bekannter Gravitationskonstante die Masse - des Ballens 32, 32' bestimmt. Die Positionsänderung des Ballens 32 bzw. 32' bewirkt unterschiedliche von der Messeinrichtung 34 erfasste Gewichtskräfte. Die beiden Ausgangssignale der Messeinrichtung 34, die auch über einen längeren Zeitraum erfasst und gemittelt werden können, um beispielsweise den verfälschenden Einfluss von Bodenunebenheiten zu vermindern, hängen von der Gewichtskraft des Ballens 32, 32' und bekannten mechanischen Eigenschaften der Maschine 10 ab. Durch ein geeignetes Rechenverfahren wird aus den bekannten und den gemessenen Größen die Gewichtskraft des Ballens 32, 32' berechnet. Dabei können auch durch Vergleichsmessungen gewonnene Kalibriergrößen verwendet werden. Die ermittelte Gewichtskraft wird in der Anzeige- und Speichereinrichtung 42 angezeigt und zur späteren Verwendung in der herausnehmbaren Speichereinrichtung 44 abgespeichert. Es folgt der Schritt 112, in dem die Routine beendet wird. Die Verarbeitungseinrichtung 36 steht danach bereit, die Gewichtskraft des nachfolgenden Ballens zu messen.

## Patentansprüche

1. Maschine (10) in Form einer Presse zur Erzeugung von Ballen, mit einem Fahrgestell (16), einer Presse (12) und einer Vorrichtung zur Messung der Gewichtskraft eines Ballen (32, 32') in der Maschine (10), wobei der Ballen (32, 32') in der Maschine (10) zwischen einer ersten Position und einer zweiten Position beweglich ist und eine mit einer Verarbeitungseinrichtung (36) verbundene Messeinrichtung (34) zur Erfassung einer durch die Gewichtskraft des Ballen (32, 32') beeinflussten Messgröße vorgesehen ist, **dadurch gekennzeichnet, dass** die Messeinrichtung (34) derart angeordnet ist, dass das von ihr bereitgestellte Signal sowohl bei einem in der ersten Position befindlichen Ballen (32) als auch bei einer in der zweiten Position befindlichen Ballen (32') von der Gewichtskraft des Ballens (32, 32') abhängt, und dass die Verarbeitungseinrichtung (36) eingerichtet ist, die Gewichtskraft des Ballens (32, 32') anhand eines bei einer an der ersten Position befindlichen Ballen (32) ausgegebenen ersten Signals der Messeinrichtung (34) und eines bei der an der zweiten Position befindlichen Ballen (32') ausgegebenen zweiten Signals der Messeinrichtung (34) zu berechnen.

2. Maschine (10) nach Anspruch 1, **dadurch gekennzeichnet, dass** die Verarbeitungseinrichtung (36) betreibbar ist, die Gewichtskraft des Ballens (32, 32') anhand bekannter mechanischer Eigenschaften der Maschine (10) und der Signale der Messeinrichtung (34) zu berechnen.

3. Maschine (10) nach Anspruch 1 oder 2, **dadurch gekennzeichnet, dass** die Messeinrichtung (34) zwischen einem Rahmen (20) der Maschine (10) und Rädern (18) und/oder einer Kupplungsöse (24) der Maschine (10) angeordnet ist.

4. Maschine (10) nach einem der vorhergehenden Ansprüche, **dadurch gekennzeichnet, dass** nur eine einzige Messeinrichtung (34) vorhanden ist.

5. Maschine (10) nach einem der Ansprüche 1 bis 4, **dadurch gekennzeichnet, dass** auf dem Fahrgestell (16) ein Wickelgerät (14) angeordnet ist und dass die erste Position eine Ballenherstellungsposition ist und dass die zweite Position eine Ballenumwicklungsposition ist.

6. Verfahren zur Messung der Gewichtskraft eines Ballens (32, 32'), mit folgenden Schritten:
Bereitstellen einer Maschine (10) in Form einer Presse zur Erzeugung von Ballen mit einem Fahrgestell (16) und einer Presse (12),
Positionieren eines Ballens (32) in der Maschine (10) in einer ersten Position und Erfassung einer ersten von der Gewichtskraft des Ballens (32) beeinflussten Messgröße,
Verbringen des Ballens (32') in eine zweite Position in der Maschine (10) und Erfassung einer zweiten von der Gewichtskraft des Ballens (32') beeinflussten Messgröße, und
Berechnung der Gewichtskraft des Ballens (32, 32') anhand der ersten Messgröße und der zweiten Messgröße.

## Claims

1. Machine (10) in the form of a baler for producing bales, with a chassis (16), a baler (12) and a device for measuring the weight of a bale (32, 32') in the machine (10), wherein the bale (32, 32') is moveable in the machine (10) between a first position and a second position, and a measuring device (34) which is connected to a processing device (36) is provided in order to record a measured variable influenced by the weight of the bale (32, 32'), **characterized in that** the measuring device (34) is arranged in such a manner that the signal supplied by it depends on the weight of the bale (32, 32') both for a bale (32) in the first position and for a bale (32') in the second position, and **in that** the processing device (36) is set up to calculate the weight of the bale (32, 32') with reference to a first signal of the measuring device (34), which signal is issued for a bale (32) at the first position, and with reference to a second signal of the measuring device (34), which signal is issued for the bale (32') at the second position.

2. Machine (10) according to Claim 1, **characterized in that** the processing device (36) can be operated in order to calculate the weight of the bale (32, 32') with reference to known mechanical properties of the machine (10) and the signals of the measuring device (34).

3. Machine (10) according to Claim 1 or 2, **characterized in that** the measuring device (34) is arranged between a frame (20) of the machine (10) and wheels (18) and/or a coupling eye (24) of the machine (10).

4. Machine (10) according to one of the preceding claims, **characterized in that** there is just a single measuring device (34).

5. Machine (10) according to one of Claims 1 or 4, **characterized in that** a wrapping apparatus (14) is arranged on the chassis (16), and **in that** the first position is a bale production position and **in that** the second position is a bale-wrapping position.

6. Method for measuring the weight of a bale (32, 32'), with the following steps:
supplying a machine (10) in the form of a baler for producing bales, with a chassis (16) and a baler (12),
positioning a bale (32) in the machine (10) in a first position and recording a first measured variable influenced by the weight of the bale (32),
bringing the bale (32') into a second position in the machine (10) and recording a second measured variable influenced by the weight of the bale (32'), and
calculating the weight of the bale (32, 32') with reference to the first measured variable and the second measured variable.

## Revendications

1. Machine (10) sous forme de presse pour produire des balles, comprenant un châssis (16), une presse (12) et un dispositif de mesure du poids d'une balle (32, 32') dans la machine (10), la balle (32, 32') pouvant être déplacée dans la machine (10) entre une première position et une deuxième position et un dispositif de mesure (34) connecté à un dispositif de traitement (36) étant prévu pour détecter une valeur de mesure influencée par le poids de la balle (32, 32'), **caractérisée en ce que** le dispositif de mesure (34) est disposé de telle sorte que le signal qu'il fournit dépende du poids de la balle (32, 32') à la fois lorsqu'une balle (32) se trouve dans la première position et lorsqu'une balle (32') se trouve dans la deuxième position, et **en ce que** le dispositif de traitement (36) est prévu pour calculer le poids de la balle (32, 32') à l'aide d'un premier signal du dispositif de mesure (34) émis lorsqu'une balle (32) se trouve dans la première position et d'un deuxième signal du dispositif de mesure (34) lorsqu'une balle (32') se trouve dans la deuxième position.

2. Machine (10) selon la revendication 1, **caractérisée en ce que** le dispositif de traitement (36) peut être utilisé pour calculer le poids de la balle (32, 32') à l'aide de propriétés mécaniques connues de la machine (10) et des signaux du dispositif de mesure (34).

3. Machine (10) selon la revendication 1 ou 2, **caractérisée en ce que** le dispositif de mesure (34) est disposé entre un cadre (20) de la machine (10) et les roues (18) et/ou un oeillet d'accouplement (24) de la machine (10).

4. Machine (10) selon l'une quelconque des revendications précédentes, **caractérisée en ce que** seulement un dispositif de mesure (34) unique est prévu.

5. Machine (10) selon l'une quelconque des revendications 1 à 4, **caractérisée en ce que** l'on dispose sur le châssis (16) un appareil d'enroulement (14) et **en ce que** la première position est une position de fabrication de balle et **en ce que** la deuxième position est une position d'enroulement de balle.

6. Procédé de mesure du poids d'une balle (32, 32'), comprenant les étapes suivantes :
fourniture d'une machine (10) sous la forme d'une presse pour produire des balles, avec un châssis (16) et une presse (12),
positionnement d'une balle (32) dans la machine (10) dans une première position et détection d'une première valeur de mesure influencée par le poids de la balle (32),
déplacement de la balle (32') dans une deuxième position dans la machine (10) et détection d'une deuxième valeur de mesure influencée par le poids de la balle (32') et
calcul du poids de la balle (32, 32') à l'aide de la première valeur de mesure et de la deuxième valeur de mesure.
